# EUROPÄISCHE PATENTANMELDUNG

(11) **EP 3 450 862 A1**
(43) Veröffentlichungstag der Anmeldung: **06.03.2019**
(21) Anmeldenummer: 17188267.3
(22) Anmeldetag: 29.08.2017
(51) Int. Cl.: F24F 3/147, F24F 3/14, F24F 5/00, F24F 12/00

(54) **VORRICHTUNG FÜR EIN GEBÄUDE, INSBESONDERE EINE SCHWIMMHALLE, ZUM AUSTAUSCHEN VON FEUCHTIGKEIT UND WÄRME**

(71) Anmelder: Grüniger, Emil, 8852 Altendorf (CH)
(72) Erfinder: Grüniger, Emil, 8852 Altendorf (CH)
(74) Vertreter: Schaad, Balass, Menzl & Partner AG

(57) **Zusammenfassung**

Die Vorrichtung für ein Gebäude, insbesondere eine Schwimmhalle, zum Austauschen von Feuchtigkeit und Wärme umfasst einen ersten Strömungskanal (20), einen zweiten Strömungskanal (18), einen ersten Ventilator (38), um angesaugte Abluft (28) als einen ersten Luftstrom (37) durch den ersten Strömungskanal (20) aus dem Gebäude abzuführen, einen zweiten Ventilator (36), um angesaugte Aussenluft (30) als einen zweiten Luftstrom (39) durch den zweiten Strömungskanal (18) ins Gebäude hineinzuführen, einen Sorptionsrotor (22), und einen, in Strömungsrichtung des zweiten Luftstroms (39) gesehen, stromaufwärts bezüglich des Sorptionsrotors (22) angeordneten Wärmetauscherrotor (23), wobei von einer dem Sorptionsrotor (22) zugewandten Stirnfläche (25a) des Wärmetauscherrotors (23) zu einer dem Wärmetauscherrotor (23) zugewandten Stirnfläche (24a) des Sorptionsrotors (22) sich ein dem ersten Strömungskanal (20) zugeordneter erster Zwischenraum (44) und ein dem zweiten Strömungskanal (18) zugeordneter zweiter Zwischenraum (46) erstrecken. Der erste Zwischenraum (44) und der zweite Zwischenraum (46) sind gegenüber der Umgebung abgeschlossen.

## Beschreibung

Die Erfindung betrifft eine Vorrichtung für ein Gebäude, insbesondere eine Schwimmhalle, zum Austauschen von Feuchtigkeit und Wärme gemäss dem Oberbegriff des Anspruchs 1 und ein Verfahren zum Feuchtigkeits- und Wärmeaustauch für ein Gebäude, insbesondere eine Schwimmhalle, gemäss dem Oberbegriff des Anspruchs 12.

Eine Vorrichtung zur Feuchtigkeitsregelung eines Gebäudes ist zum Beispiel aus dem Dokument EP 1 666 803 A1 bekannt. Die Vorrichtung gemäss der neunten offenbarten Ausführungsform auf Figur 24 umfasst ein Gehäuse mit einem Ablufteinlass und einem Fortluftauslass, die über einen ersten Strömungskanal miteinander verbunden sind, und mit einem Aussenlufteinlass und einem Zuluftauslass, die über einen zweiten Strömungskanal miteinander verbunden sind. Abluft wird durch den ersten Strömungskanal als ein erster Luftstrom aus dem Gebäude als Fortluft abgeführt, und Aussenluft wird durch den zweiten Strömungskanal als ein zweiter Luftstrom ins Gebäude als Zuluft hineingeführt. Ausserdem umfasst die Vorrichtung einen mit variabler Drehgeschwindigkeit antreibbaren Sorptionsrotor zum Austauschen von Wärme und Feuchtigkeit zwischen dem ersten Luftstrom und dem zweiten Luftstrom, und einen, in Strömungsrichtung des ersten Luftstroms gesehen, stromabwärts des Sorptionsrotors angeordneten Wärmetauscherrotor zum Austauschen von Wärme zwischen dem ersten Luftstrom und dem zweiten Luftstrom. Ferner umfasst die Vorrichtung ein Kraft-Wärme-Kopplungssystem, dessen Abgas zur Erwärmung des ersten Luftstroms im ersten Strömungskanal zwischen dem Sorptionsrotor und dem Wärmetauscherrotor, dienen kann. Im Betrieb der Vorrichtung zur Befeuchtung des Gebäudes wird der erste Luftstrom mit dem warmen Abgas des Kraft-Wärme-Kopplungssystems erwärmt, welcher Wärme über den Wärmetauscherrotor an den zweiten Luftstrom abgibt. Der erwärmte zweite Luftstrom wirkt mit dem Sorptionsrotor zusammen, welcher gespeicherte Feuchtigkeit an den ersten Luftstrom abgibt. Im Betrieb der Vorrichtung zur Entfeuchtung und Kühlung des Gebäudes ist das Kraft-Wärme-Kopplungssystem ausgeschaltet und der erste Luftstrom wird nicht zusätzlich erwärmt. Der erwärmte erste Luftstrom wirkt mit dem Sorptionsrotor zusammen, welcher gespeicherte Feuchtigkeit an die Fortluft abgibt. Der erste Luftstrom wird über den Wärmetauscherrotor erwärmt und nimmt Wärme vom zweiten Luftstrom auf, welche über den Sorptionsrotor entfeuchtet wird und schliesslich dem Gebäude zugeführt. Der erste Luftstrom und der zweite Luftstrom durchströmen den Sorptionsrotor und den Wärmetauscherrotor wenigstens annähernd vollständig.

Diese Vorrichtung und das entsprechende Verfahren zur Befeuchtung und zur Entfeuchtung und Kühlung eines Gebäudes ist jedoch für eine Schwimmhalle nicht geeignet.

Da das warme Abgas des Kraft-Wärme-Kopplungssystems in den ersten Strömungskanal hineingeführt wird, kann der zweite Luftstrom zur Heizung des Gebäudes nur mittelbar über den Wärmetauscherrotor erwärmt werden, und im Übrigen so, dass die Erwärmung des zweiten Luftstroms vor dem Sorptionsrotor stattfindet. Folglich wird gleichzeitig mit der Erwärmung des zweiten Luftstroms im Sorptionsrotor abgespeicherte Feuchtigkeit abgegeben und dem zweiten Luftstrom übertragen. In einer Schwimmhalle ist Feuchtigkeit jedoch in der Regel bereits in einem erwünschten Ausmass vorhanden und die Zuführung erwärmter Zuluft mit zusätzlicher bzw. unnötiger Feuchtigkeit ist ein Nachteil.

Ausserdem ist die Erwärmung des ersten Luftstroms über das Abgas eines Kraft-Wärme-Kopplungssystems eine mögliche Quelle für Belastungsstoffe, die über den Wärmetauscherrotor vom ersten Luftstrom in den zweiten Luftstrom eingeführt werden können.

Eine gute Luftqualität in Schwimmhallen erfordert weiter einen möglichst grossen Austausch der Schwimmhallenluft mit sauberer Aussenluft. Für die Luft- und Wasseraufbereitung in einer Schwimmhalle werden nämlich verschiedene Chemikalien zur Entfernung von Mikro-Organismen und Belastungsstoffen eingesetzt. Im Beckenwasser entstehen zum Beispiel durch den Zusatz von Chlor eine grosse Anzahl verschiedener Chlorverbindungen, die sich zusammen mit der Wasserverdunstung aus dem Schwimmbecken in die Schwimmhallenluft verteilen und welche Gesundheitsfragen für das Personal und die Badenden aufwerfen. Ferner spielen solche Chemikalien eine Rolle in der Alterung der Schwimmhalle, zum Beispiel durch erhöhte Korrosion.

Eine Vorrichtung zum Erwärmen und Entfeuchten eines Gebäudes, wie einer Schwimmhalle, ist zum Beispiel aus dem Dokument DE 10 2006 007 845 B4 bekannt. Allerdings muss mit einer solchen Vorrichtung ein wesentlicher Anteil der Abluft durch einen Bypass mit der Zuluft in die Schwimmhalle zurückgeführt werden, um die erwünschte Feuchtigkeit und Temperatur zu behalten, d.h. um zu vermeiden, unter die Behaglichkeitsgrenze in der Schwimmhalle zu fallen.

Diese Vermischung der mit Chemikalien und Mikro-Organismen beladenen Abluft mit der Zuluft, führt zu einer Übertragung dieser Chemikalien und Mikro-Organismen an die saubere Zuluft und zu ihrer Verteilung in der ganzen Schwimmhalle, was eigentlich vermieden werden sollte.

Der Betrieb der Vorrichtung zum Erwärmen und Entfeuchten eines Gebäudes, wie einer Schwimmhalle, soll auch bei tiefen negativen Temperaturen der Aussenluft möglich sein, um einen breiten und flexiblen Einsatz der Vorrichtung zu ermöglichen, vorzugsweise ohne Kondensationsphase in der Vorrichtung. Kondensation in der Vorrichtung führt nämlich zu Korrosion, welche die Wartungskosten erhöht und die Lebensdauer der Vorrichtung verkürzt. Bei tiefen Temperaturen der Aussenluft kann folglich eine Wärmequelle zur Vorwärmung der Aussenluft nötig sein, um eine Kondensationsphase in der Vorrichtung zu vermeiden, was zu zusätzlichen Betriebskosten führt.

Aufgabe der vorliegenden Erfindung ist es somit, eine Vorrichtung für ein Gebäude, insbesondere eine Schwimmhalle, zum Austauschen von Feuchtigkeit und Wärme und ein entsprechendes Verfahren zur Verfügung zu stellen, welche bzw. welches, im Wesentlichen ohne Kondensationsphase in der Vorrichtung, gleichzeitig eine Mischung der mit Chemikalien und Mikro-Organismen beladenen Abluft mit der Zuluft und eine Zuführung erwärmter Zuluft ins Gebäude mit unerwünschter und unnötiger Feuchtigkeit im Wesentlichen vermeiden.

Diese Aufgabe wird erfindungsgemäss durch eine Vorrichtung gemäss Anspruch 1 und ein Verfahren gemäss Anspruch 12 gelöst. Bevorzugte Ausführungsformen der Erfindung sind in den abhängigen Ansprüchen wiedergegeben.

Die Erfindung betrifft somit eine Vorrichtung für ein Gebäude, insbesondere eine Schwimmhalle, zum Austauschen von Feuchtigkeit und Wärme umfassend einen ersten Strömungskanal, der einen Ablufteinlass und einen Fortluftauslass miteinander verbindet, und einen zweiten Strömungskanal, der einen Aussenlufteinlass und einen Zuluftauslass miteinander verbindet.

Weiter umfasst die Vorrichtung einen dem ersten Strömungskanal zugeordneten ersten Ventilator, um durch den Ablufteinlass angesaugte Abluft als einen ersten Luftstrom durch den ersten Strömungskanal dem Fortluftauslass zuzuführen und dort als Fortluft aus dem Gebäude abzuführen. Ebenfalls umfasst die Vorrichtung einen dem zweiten Strömungskanal zugeordneten zweiten Ventilator, um durch den Aussenlufteinlass angesaugte Aussenluft als einen zweiten Luftstrom durch den zweiten Strömungskanal dem Zuluftauslass zuzuführen und dort als Zuluft ins Gebäude hineinzuführen.

Ausserdem umfasst die Vorrichtung einen mit variabler Drehgeschwindigkeit motorangetriebenen Sorptionsrotor zum Austauschen von Wärme und Feuchtigkeit zwischen dem ersten Luftstrom und dem zweiten Luftstrom, und einen, in Strömungsrichtung des zweiten Luftstroms gesehen, stromaufwärts bezüglich des Sorptionsrotors angeordneten, motorangetriebenen Wärmetauscherrotor zum Austauschen von Wärme zwischen dem ersten Luftstrom und dem zweiten Luftstrom. Vorzugsweise wird ein Elektromotor zum Antrieb des Sorptionsrotors und/oder des Wärmetauscherrotors eingesetzt.

Von einer dem Sorptionsrotor zugewandten Stirnfläche des Wärmetauscherrotors zu einer dem Wärmetauscherrotor zugewandten Stirnfläche des Sorptionsrotors erstrecken sich ein dem ersten Strömungskanal zugeordneter erster Zwischenraum und ein dem zweiten Strömungskanal zugeordneter zweiter Zwischenraum, wobei der erste Luftstrom und der zweite Luftstrom den Sorptionsrotor und den Wärmetauscherrotor wenigstens annähernd vollständig durchströmen.

Erfindungsgemäss sind der erste Zwischenraum und der zweite Zwischenraum gegenüber der Umgebung abgeschlossen. Diese Anordnung hat den Effekt, dass der den Wärmetauscherrotor verlassende zweite Luftstrom dem Sorptionsrotor bzw. der den Sorptionsrotor verlassende erste Luftstrom dem Wärmetauscherrotor im Wesentlichen ohne Zustandsänderung zugeführt wird. Dies bedeutet, dass der erste Luftstrom bzw. der zweite Luftstrom durch den ersten Zwischenraum bzw. den zweiten Zwischenraum frei von Wärmeenergiezuführung geführt werden. Somit wird insbesondere sichergestellt, dass der den Wärmetauscherrotor verlassende zweite Luftstrom einen über die Wärmeübertragung vom ersten Luftstrom erreichten Zustand beibehält, um einen Betrieb der Vorrichtung ohne Kondensationsphase zu ermöglichen.

Mit dem Begriff "gegenüber der Umgebung abgeschlossen" ist gemeint, dass im Wesentlichen kein Energieaustausch zwischen der Umgebung und dem ersten bzw. dem zweiten Luftstrom in den Zwischenräumen stattfindet. Der Austausch von Feuchtigkeit zwischen dem ersten und dem zweiten Luftstrom findet im Wesentlichen im Sorptionsrotor und der Austausch von Wärme zwischen dem ersten und dem zweiten Luftstrom findet im Wärmetauscherrotor und im Sorptionsrotor statt. Über den Wärmetauscherrotor wird praktisch keine Feuchtigkeit zwischen dem ersten und dem zweiten Luftstrom ausgetauscht. Der erste und der zweite Zwischenraum sind frei von Heiz- oder Kühlelementen, sowie von gewärmter oder gekühlter Luftzuführung neben dem ersten und dem zweiten Luftstrom.

Der erste und der zweite Zwischenraum sind derart ausgebildet, dass sie die Wartung des Wärmetauscherrotors und des Sorptionsrotors in einfacher Weise ermöglichen. Vorzugsweise kann ein Temperatursensor und/oder einen Feuchtigkeitssensor im ersten, gegebenenfalls im zweiten, Zwischenraum oder in beiden Zwischenräume angeordnet sein.

Da durch den Aussenlufteinlass angesaugte Aussenluft über den Wärmetauscherrotor vorerwärmt wird, wird eine Kondensationsphase in der Vorrichtung auch bei tiefen Aussenlufttemperaturen im Wesentlichen vermieden. Gleichzeitig wird eine Mischung der mit Chemikalien und Mikro-Organismen beladenen Abluft mit der Zuluft und die Zuführung unerwünschter und unnötiger Feuchtigkeit ins Gebäude im Wesentlichen vermieden.

Vorzugsweise sind der erste Strömungskanal und der zweite Strömungskanal durch ein Gehäuse definiert. Bevorzugt ist das Gehäuse aus Aluminiumblechen gefertigt und bietet somit eine korrosionsbeständige Oberfläche für einen Einsatz in einer Schwimmhalle, jedoch sind andere korrosionsbeständige Materialien möglich. Selbstverständlich werden die Materialien für die Herstellung des Gehäuses und im Allgemeinen aller Teile und Baugruppen in dieser Vorrichtung so ausgewählt, dass sie für einen Betrieb in der Einsatzumgebung der Vorrichtung und je nach geltenden Normen tauglich sind.

Um die Energiebilanz der Vorrichtung zu verbessern, können das Gehäuse und/oder Teile der Vorrichtung mit einem Wärmedämmungsmittel versehen werden.

Vorzugsweise ist eine Nachheizung im zweiten Strömungskanal, in Strömungsrichtung des zweiten Luftstroms gesehen, stromabwärts des Sorptionsrotors angeordnet, mit der der zweite Luftstrom bei Bedarf auf die erforderliche Temperatur gebracht wird. Diese Anordnung erlaubt es, den zweiten Luftstrom und folglich die Zuluft stromabwärts des Sorptionsrotors zu erwärmen, d. h. unabhängig der im Sorptionsrotor abgespeicherten Feuchtigkeit. Da der Wärme- und Feuchtigkeitsaustausch zwischen dem ersten Luftstrom und dem zweiten Luftstrom bereits in diesem Abschnitt des zweiten Strömungskanals im Wesentlichen stattgefunden hat, braucht die Nachheizung nur noch wenig Wärmeenergie, um die erforderliche Temperatur zu erreichen.

Denkbar ist insbesondere der Einsatz eines Energierückgewinnungssystems für die Nachheizung. Ebenfalls denkbar ist der Einsatz eines Pumpen-Warmwasser-Erhitzers und/ oder eines Kondensators einer Wärmepumpe. Andere Wärmequellen für die Nachheizung sind ebenfalls möglich, wie etwa Fernheizung oder andere Energierückgewinnungssysteme. Die Art der Nachheizung wird beispielweise nach Vergleich der Betriebsplanung der Vorrichtung und der Energiepreisen ausgewählt.

In einer bevorzugten Ausführungsform ist der erste Ventilator im ersten Strömungskanal nahe dem Fortluftauslass und der zweite Ventilator im zweiten Strömungskanal nahe dem Zuluftauslass angeordnet. Durch diese Anordnung wird die Abluft als erster Luftstrom durch den Sorptionsrotor und den Wärmetauscherrotor hindurch angesaugt und mit dem im ersten Strömungskanal dadurch erzeugten Unterdruck wird wenigstens annähernd vollständig vermieden, Belastungsstoffe der Abluft in den zweiten Luftstrom und folglich in die Zuluft zu übertragen.

In bevorzugter Weise ist der zweite Ventilator, in Strömungsrichtung des zweiten Luftstroms gesehen, stromabwärts des Sorptionsrotors angeordnet, wobei bevorzugt die Nachheizung dem zweiten Ventilator folgt. Dieser Anordnung hat den Vorteil, dass der zweite Ventilator nicht von der Nachheizung beheizt und folglich geschont betrieben wird.

Sorptionsrotoren sind dem Fachmann bekannt, zum Beispiel aus den Dokumenten DE 10 2005 003 543 A1, EP 2 520 890 A1 oder DE 101 57 550 A1. Der Sorptionsrotor bildet eine zylinderförmige, um eine Achse rotierende, eine erste und eine zweite Stirnfläche aufweisende Speichermasse, welche üblicherweise aus einer dünnen, um eine Nabe gewickelten, gewellten Folie aus Metall, bevorzugt Aluminium, oder Papierwerkstoff besteht, wodurch eine Vielzahl axial angeordnete, von der ersten zur zweiten Stirnfläche verlaufende, kleine Kanäle entstehen. Je nach Verwendung wird die Oberfläche der Speichermasse, d. h. die mit dem ersten und mit dem zweiten Luftstrom zusammenwirkende Oberfläche des Sorptionsrotors, mit einem Sorptionsmittel beschichtet, um den erwünschten Feuchtigkeitsaustausch ohne Kondensationsphase mit dem Sorptionsrotor zu erreichen. In bekannterweise sind Sorptionsrotoren je nach Grösse einteilig oder segmentiert hergestellt.

Eine vorteilhafte Ausbildung der erfindungsgemässen Vorrichtung sieht vor, dass die Oberfläche der Speichermasse mit Zeolith-Material beschichtet ist, wie etwa im Dokument DE 10 2005 003 543 A1 offenbart, bevorzugt mit einer Porengrösse zwischen 0,3 nm und 1,5 nm, besonders bevorzugt zwischen 0,3 nm und 0,5 nm. Die Anwendung eines solchen Zeolith-Materials vermeidet, dass flüchtige organische Verbindungen (VOC, Volatile Organic Compounds) und Belastungsstoffe über die Oberfläche der Speichermasse von der Abluft an die Zuluft übertragen werden. Hingegen können Wasserdampfmoleküle von dieser Beschichtung aufgenommen und abgegeben werden.

Wärmetauscherrotor sind dem Fachmann ebenfalls bekannt, zum Beispiel aus den Dokumenten US 4 924 934 B1 oder EP 1 271 086 A1. Der Wärmetauscherrotor kann ähnlich wie der Sorptionsrotor ausgebildet sein, jedoch ist die Oberfläche der Speichermasse frei von Sorptionsmittel, da kein Feuchtigkeitsaustausch nötig ist. Der Wärmetauscherrotor dient dazu, Wärme zwischen dem ersten Luftstrom und dem zweiten Luftstrom auszutauschen.

Typischerweise haben der Sorptionsrotor und der Wärmetauscherrotor dieselbe Rotationsachse, welche eine Längsachse des Gehäuses, in dem sie eingebaut sind, definiert. Der erste und der zweite Strömungskanal verlaufen entlang dieser Achse wenigstens annähernd rechtwinklig zu den Stirnflächen des Sorptionsrotors und des Wärmetauscherrotors, sodass der erste und der zweite Luftstrom gleichzeitig, aber getrennt im jeweiligen Strömungskanal, die Speichermassen in entgegengesetzten Richtungen durchströmen.

In einer bevorzugten Ausführungsform wird die Drehgeschwindigkeit des Wärmetauscherrotors gesteuert, um die Temperatur des dem Sorptionsrotor zugeführten zweiten Luftstroms zu regulieren. Die erwünschte Temperatur des dem Sorptionsrotor zugeführten zweiten Luftstroms wird so bestimmt, dass die Vorrichtung bei niedrigen Temperaturen der Aussenluft, insbesondere negativen Temperaturen, vorzugsweise ohne Kondensationsphase in der Vorrichtung, betrieben werden kann. Diese erwünschte Temperatur wird über die Drehgeschwindigkeit des Wärmetauscherrotors in Abhängigkeit der Temperaturdifferenz zwischen der Aussenluft und der Abluft geregelt. Bei einer grossen Temperaturdifferenz ist die Drehgeschwindigkeit des Wärmetauscherrotors hoch, um die Wärmeübertragung zu fördern, und umgekehrt bei einer kleinen Temperaturdifferenz. Kondensation in der Vorrichtung muss nämlich vermieden werden, da sie zu Korrosion führt, welche die Wartungskosten erhöht und die Lebensdauer der Vorrichtung verkürzt.

Da die Erwärmung des zweiten Luftstroms über eine Wärmeübertragung vom ersten Luftstrom, welcher Wärme der Abluft enthält, zum zweiten Luftstrom durch den Wärmetauscherrotor erfolgt, ist keine zusätzliche Energiequelle zur Vorwärmung des zweiten Luftstroms nötig und ein wirtschaftlicher Aufbau und Betrieb der Vorrichtung möglich. Die Drehgeschwindigkeit des Sorptionsrotors wird gesteuert, um die absolute Feuchtigkeit der Zuluft zu regulieren, insbesondere in Abhängigkeit von der Feuchtigkeitsdifferenz zwischen der Zuluft und der Abluft, und die Temperatur der Zuluft ändert sich in Abhängigkeit ihrer absoluten Feuchtigkeit.

In einer bevorzugten Ausführungsform wird eine vorbestimmte konstante Drehgeschwindigkeit des Wärmetauscherrotors beibehalten und die Strömungsgeschwindigkeit der Luftströme mit der Drehgeschwindigkeit der Ventilatoren angepasst, sodass die erwünschte Temperatur des dem Sorptionsrotor zugeführten zweiten Luftstroms erreicht wird.

In einer bevorzugten Ausführungsform wird eine vorbestimmte konstante Drehgeschwindigkeit des Wärmetauscherrotors beibehalten und die Feuchtigkeit der Zuluft lediglich über die Drehgeschwindigkeit des Sorptionsrotors reguliert, wobei die Temperatur der Zuluft sich in Abhängigkeit ihrer absoluten Feuchtigkeit ändert. Der Vorteil eines solchen Betriebs ist eine einfache Betriebseinstellung.

Diese Ausführungsformen sind mögliche Betriebe der Vorrichtung und stellen keine einschränkende Liste dar.

Die Drehgeschwindigkeit des Sorptionsrotors und des Wärmetauscherrotors wird über die Ansteuerung eines Antriebsmotors geregelt. Wenn die Zuluft stark befeuchtet werden muss, wird die Drehzahl des Sorptionsrotors erhöht und umgekehrt, wenn die Zuluft wenig befeuchtet werden muss.

Vorzugsweise ist ein mit einer Umluftklappe versehener Umluftdurchlass zwischen dem ersten und dem zweiten Strömungskanal, in Strömungsrichtung des ersten Luftstroms gesehen, stromabwärts des Wärmetauscherrotors und, in Strömungsrichtung des zweiten Luftstroms gesehen, stromaufwärts des Wärmetauscherrotors angeordnet.

Die Umluftklappe ist geschlossen, um im stationären Betrieb mit wenigstens annähernd 100% Aussenluft, ohne Kondensationsphase, zu fahren.

Mit dem Begriff "stationärer Betrieb" ist der Betrieb der Vorrichtung nach der transienten Phase beim Anfahren gemeint, d.h. nachdem das gewünschte Klima im Gebäude, insbesondere in der Schwimmhalle, erreicht ist.

Mit dem Begriff "wenigstens annähernd 100% Aussenluft" werden die Leckagen im Sorptionsrotor und im Wärmetauscherrotor berücksichtigt, welche zur Mischung eines kleinen Anteils des ersten Luftstroms - typischerweise höchstens 3%, insbesondere höchstens 1% - mit dem zweiten Luftstrom führen.

Im stationären Betrieb mit wenigstens annähernd 100% Aussenluft bedeutet dies, dass die aus dem Gebäude durch den Ablufteinlass angesaugte Abluft als erster Luftstrom im ersten Luftkanal durch den Fortluftauslass wenigstens annähernd vollständig an die Umgebung abgegeben wird, und dass gleichzeitig die durch den Aussenlufteinlass angesaugte Aussenluft als zweiter Luftstrom im zweiten Luftkanal mit dem Wärmetauscherrotor auf die geforderte Temperatur gebracht, und mit dem Sorptionsrotor, ohne Kondensationsphase, auf die geforderte absolute Feuchtigkeit gebracht, und durch den Zuluftauslass dem Gebäude zugeführt wird. Folglich wird eine Mischung der mit Chemikalien und Mikro-Organismen beladenen Abluft mit der Zuluft und Korrosion in der Vorrichtung wenigstens annähernd vollständig vermieden.

Der erste Luftstrom und der zweite Luftstrom sind voneinander getrennt. In Folge der Drehung des Sorptionsrotors und des Wärmetauscherrotors werden ein kleiner Anteil des ersten Luftstroms in den zweiten Luftkanal und ein kleiner Anteil des zweiten Luftstroms in den ersten Luftkanal transportiert. Sollte dies vermieden werden, insbesondere den Transport des kleinen Anteils des ersten Luftstroms, wird dieser kleine Anteil des ersten Luftstroms, vorzugsweise über eine Spülzone im Sorptionsrotor und/oder im Wärmetauscherrotor, mit Luft des zweiten Luftstroms ersetzt. Dadurch wird eine Mischung des mit Chemikalien und Mikro-Organismen beladenen ersten Luftstroms mit dem zweiten Luftstrom weitgehend vermieden und entsprechend ein zweiter Luftstrom, i.e. eine Zuluft, annähernd ohne Kontamination dem Gebäude zugeführt. Da der Wärme- und Feuchtigkeitsaustausch ohne Kondensationsphase erfolgt, wird gleichzeitig Korrosion in der Vorrichtung vermieden.

In einer bevorzugten Ausführungsform sind der Aussenlufteinlass und der Fortluftauslass mit einer Aussenlufteinlass- bzw. Fortluftauslassklappe versehen. Selbstverständlich können auch der Ablufteinlass und der Zuluftauslass jeweils mit einer Klappe versehen sein.

Die Aussenlufteinlass- bzw. Fortluftauslassklappe werden geschlossen, um die Vorrichtung von der Umgebung zu trennen. Dies kann im nicht-stationären Betrieb der Vorrichtung der Fall sein, zum Beispiel beim Anfahren der Vorrichtung oder bei der Zirkulation der Schwimmhallenluft über die Vorrichtung.

Bei einer Sonderbetriebsart der Vorrichtung zur schnellen Aufwärmung der Gebäudeluft über die Nachheizung, ist die Umluftklappe beim Umluftdurchlass offen und sind die Aussenlufteinlass- und Fortluftauslassklappe geschlossenen, der erste und/ oder der zweite Ventilator, sowie vorzugsweise der Sorptionsrotor und/oder der Wärmetauscherrotor in Betrieb. Dadurch wird die Abluft als erster Luftstrom im ersten Strömungskanal durch den Sorptionsrotor, dann durch den Wärmetauscherrotor, weiter über den Umluftdurchlass in den zweiten Strömungskanal und dort durch den Wärmetauscherrotor, dann durch den Sorptionsrotor als zweiter Luftstrom zurück als Zuluft in die Schwimmhalle geführt. Die Erwärmung der Zuluft erfolgt durch die Nachheizung stromabwärts des Sorptionsrotors im zweiten Strömungskanal, die je nach erwünschter Temperatur der Gebäudeluft geregelt wird. Wenn die erwünschte Temperatur der Gebäudeluft erreicht ist, wird die Umluftklappe des Umluftdurchlasses geschlossen und werden die Aussenlufteinlass- und Fortluftauslassklappen geöffnet.

Nach dem Anfahren der Vorrichtung geht sie nach einer transienten Anfahrphase in den stationären Betrieb über.

Bevorzugt umfasst die Vorrichtung weiter einen ersten Temperatursensor und einen ersten Feuchtigkeitssensor im ersten Strömungskanal, vorzugsweise nahe dem Ablufteinlass, sowie einen zweiten Temperatursensor und einen zweiten Feuchtigkeitssensor im zweiten Strömungskanal, vorzugsweise nahe dem Zuluftauslass. Diese Anordnung ermöglicht es, den Zustand der angesaugten Abluft bzw. der dem Gebäude zugeführten Zuluft genau zu erfassen und die Vorrichtung entsprechend zu steuern.

Vorzugsweise ist ein erster Filter im ersten Strömungskanal nahe dem Ablufteinlass und ein zweiter Filter im zweiten Strömungskanal nahe dem Aussenlufteinlass angeordnet, sodass Schmutzklumpen oder Staub nicht in die Vorrichtung eingesaugt werden und sie beschädigen können. Besonders bevorzugt ist die Anwendung von Doppelfiltern, die eine besonders gute Filterung und einfache Wartung erlauben. Schmutzklumpen werden nämlich durch den Grobfilter ausgefiltert und daher wird der stromabwärts folgende Feinstaubfilter geschützt. In Folge davon wird der Doppelfilter erst nach einem längeren Wechselintervall als bei der Verwendung von einfachen Filtern ersetzt werden. Vorzugsweise ist ein Doppelfilter stromaufwärts des Sorptionsrotors im ersten Strömungskanal und/oder stromaufwärts des Wärmetauscherrotors im zweiten Strömungskanal angeordnet.

Bei Bedarf ist es vorteilhaft ein Abscheider zur Trennung der mit Chemikalien beladenen Wassertröpfchen und Aerosole aus der Abluft, vorzugsweise einen Tropfenabscheider, stromaufwärts des Sorptionsrotors im ersten Strömungskanal, vorzugsweise stromaufwärts des ersten Filters, anzuordnen, sodass Wassertröpfchen und Aerosole nicht in die Vorrichtung eindringen und Korrosion verursachen, welche die Wartungskosten erhöht und die Lebensdauer der Vorrichtung verkürzt. Bei tiefen Temperaturen des ersten Luftstroms in der Vorrichtung wird mit dem Abscheider ebenfalls vermieden, dass Wassertröpfchen und Aerosole sich in Schnee oder Eis in der Vorrichtung umwandeln, was zu einer suboptimalen Funktionsweise der Vorrichtung führt.

Die Vorrichtung wird bevorzugt über eine Steuereinrichtung mit einer Regelungseinheit für die absolute Feuchtigkeit und die Temperatur gesteuert. Eine Anzeige der Feuchtigkeit ist jedoch im relativen sowie absoluten Wert möglich.

Die Regulierung der Temperatur des dem Sorptionsrotor zugeführten zweiten Luftstroms erfolgt vorzugsweise über die Drehgeschwindigkeit des Wärmetauscherrotors, und die Regulierung der absoluten Feuchtigkeit der Zuluft erfolgt über die Drehgeschwindigkeit des Sorptionsrotors wie vorstehend bereits erklärt.

In einer vorteilhaften Ausführungsform werden die verschiedenen Einheiten der Vorrichtung, wie z.B. die Ventilatoren, die Umluftklappe, die Aussenlufteinlass- und Fortluftauslassklappe und die Nachheizung, auch mit derselben Steuereinrichtung gesteuert. Selbstverständlich können Feuchtigkeits- und Temperaturmessungen im Gebäude oder in der Umgebung in der Regulierung der Vorrichtung berücksichtigt werden.

Die Steuerung der Feuchtigkeitsübertragung bewirkt eine genaue Feuchtigkeitsregelung im Gebäude, insbesondere in einer Schwimmhalle, wo die Verdunstung des Beckenwassers infolge einer zu geringen Feuchtigkeit reduziert wird. Dies trägt dazu bei, die gesamte Energiebilanz des Gebäudes, insbesondere der Schwimmhalle, zu verbessern.

Typischerweise wird in einem Verfahren zum Feuchtigkeits-und Wärmeaustauch für ein Gebäude, insbesondere eine Schwimmhalle, durch einen Ablufteinlass eines ersten Strömungskanals angesaugte Abluft als ein erster Luftstrom durch den ersten Strömungskanal mittels eines diesem zugeordneten ersten Ventilators einem Fortluftauslass des ersten Strömungskanals zugeführt und dort als Fortluft aus dem Gebäude abgeführt. Ferner wird durch einen Aussenlufteinlass eines zweiten Strömungskanals angesaugte Aussenluft als ein zweiter Luftstrom durch den zweiten Strömungskanal mittels eines diesem zugeordneten zweiten Ventilators einem Zuluftauslass des zweiten Strömungskanals zugeführt und dort als Zuluft ins Gebäude hineingeführt.

Wärme und Feuchtigkeit werden zwischen dem ersten Luftstrom und dem zweiten Luftstrom über einen mit variabler Drehgeschwindigkeit motorangetriebenen Sorptionsrotor austauscht. Ausserdem wird Wärme zwischen dem ersten Luftstrom und dem zweiten Luftstrom über einen, in Strömungsrichtung des zweiten Luftstroms gesehen, stromaufwärts bezüglich des Sorptionsrotors angeordneten, motorangetriebenen Wärmetauscherrotor austauscht.

Von einer dem Sorptionsrotor zugewandten Stirnfläche des Wärmetauscherrotors zu einer dem Wärmetauscherrotor zugewandten Stirnfläche des Sorptionsrotors erstrecken sich ein dem ersten Strömungskanal zugeordneter erster Zwischenraum und ein dem zweiten Strömungskanal zugeordneter zweiter Zwischenraum.

Der erste Luftstrom und der zweite Luftstrom durchströmen den Sorptionsrotor und den Wärmetauscherrotor wenigstens annähernd vollständig.

Erfindungsgemäss sind der erste Zwischenraum und der zweite Zwischenraum gegenüber der Umgebung abgeschlossen. Dadurch werden der erste Luftstrom bzw. der zweite Luftstrom durch den ersten Zwischenraum bzw. den zweiten Zwischenraum frei von Wärmeenergiezuführung geführt.

Vorzugsweise wird der zweite Luftstrom mit einer im zweiten Strömungskanal, in Strömungsrichtung des zweiten Luftstroms gesehen, stromabwärts des Sorptionsrotors angeordneten Nachheizung, auf die erforderliche Temperatur gebracht.

In einer bevorzugter Ausführungsform wird die Temperatur des dem Sorptionsrotor zugeführten zweiten Luftstroms über die Drehgeschwindigkeit des Wärmetauscherrotors reguliert. In einer bevorzugter Ausführungsform ist eine Umluftklappe eines zwischen dem ersten und dem zweiten Strömungskanal, in Strömungsrichtung des ersten Luftstroms gesehen, stromabwärts des Wärmetauscherrotors und, in Strömungsrichtung des zweiten Luftstroms gesehen, stromaufwärts des Wärmetauscherrotors angeordneten Umluftdurchlasses geschlossen, um im stationären Betrieb mit wenigstens annähernd 100% Aussenluft, ohne Kondensationsphase, zu fahren.

Die Umluftklappe ist geöffnet, um den ersten Luftstrom durch die Umluftklappe bei geschlossener Aussenlufteinlassklappe und Fortluftauslassklappe umzulenken, sodass ein schnelles Aufwärmen des zweiten Luftstroms über die Nachheizung erfolgt.

Die Vorrichtung gemäss der vorliegenden Erfindung eignet sich auch für einen Einsatz in Gebäuden, wie z.B. Hotels, öffentliche Gebäude oder Einkaufszentren, bei sehr tiefen Temperaturen der Aussenluft, typischerweise tiefer als (minus) -30°C, als Klimaanlage.

Weitere Vorteile und Eigenschaften der erfindungsgemässen Vorrichtung gehen aus der nachstehenden Beschreibung eines Ausführungsbeispiels hervor, welches anhand der beiliegenden Figuren erläutert wird. Diese zeigen rein schematisch:
- Fig. 1: in einem in vertikal verlaufenden Längsschnitt eine erfindungsgemässe Vorrichtung, wobei die Rotationsachse des Sorptionsrotors und des Wärmetauscherrotors in der Schnittebene liegt;
- Fig. 2: ein in einem Mollier h,x Diagramm dargestelltes Beispiel des Betriebs der erfindungsgemässen Vorrichtung gemäss Fig. 1 zum Austauschen von Feuchtigkeit und Wärme für eine Schwimmhalle; und
- Fig. 3: ein in einem Mollier h,x Diagramm dargestelltes Beispiel des Betriebs der erfindungsgemässen Vorrichtung gemäss Fig. 1, jedoch ohne Wärmetauscherrotor.

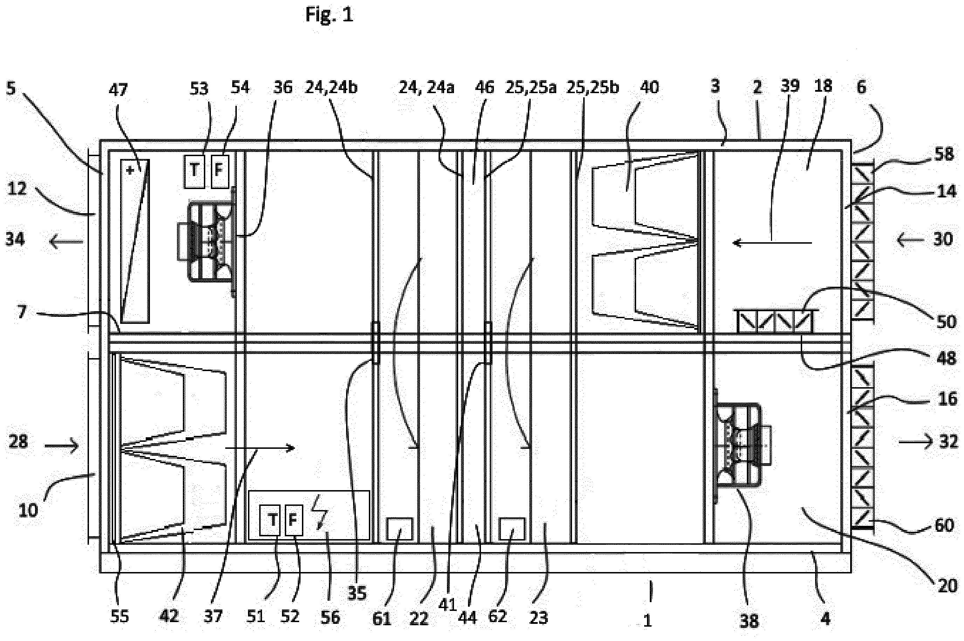

In Fig. 1 ist ein Ausführungsbeispiel der erfindungsgemässen Vorrichtung dargestellt, das im Folgenden näher beschrieben wird.

Die Vorrichtung 1 für ein Gebäude, insbesondere eine Schwimmhalle, zum Austauschen von Feuchtigkeit und Wärme besitzt ein Gehäuse 2, bevorzugt quaderförmig, mit einer oberen Wand 3 (Deckenwand), einer unteren Wand 4 (Bodenwand), zwei Seitenwänden, einer ersten und zweiten Stirnwand 5 bzw. 6, und einer horizontalen Trennwand 7 in halber Höhe des Gehäuses 2, zwischen der oberen Wand 3 und der unteren Wand 4. Die erste Stirnwand 5 ist dem Gebäude und die zweite Stirnwand 6 ist der Umgebung zugewandt.

Ein erster Strömungskanal 20 ist durch die untere Wand 4, die Seitenwände und die Trennwand 7 begrenzt und verläuft zwischen einem Ablufteinlass 10 an der ersten Stirnwand 5 und einem Fortluftauslass 16 an der zweiten Stirnwand 6. Ein zweiter Strömungskanal 18 ist durch die obere Wand 3, die Seitenwände und die Trennwand 7 begrenzt und verläuft zwischen einem Aussenlufteinlass 14 an der zweiten Stirnwand 6 und einem Zuluftauslass 12 an der ersten Stirnwand 5.

Vorzugsweise ist das Gehäuse 2 aus Aluminiumblechen gefertigt und bieten somit eine korrosionsbeständige Oberfläche für einen Einsatz in einer Schwimmhalle.

Abluft 28 wird aus dem Gebäude durch den Ablufteinlass 10 in den ersten Strömungskanal 20 als ein erster Luftstrom 37 angesaugt und durch den Fortluftauslass 16 an die Umgebung als Fortluft 32 abgegeben. Aussenluft 30 wird aus der Umgebung durch den Aussenlufteinlass 14 in den zweiten Strömungskanal 18 als ein zweiter Luftstrom 39 angesaugt und durch den Zuluftauslass 12 dem Gebäude als Zuluft 34 zugeführt.

Im Gehäuse 2 sind, vorzugsweise mittig in Längsrichtung des Gehäuses gesehen, ein in einem Sorptionsrotorgehäuse 24 angeordneter, drehbarer, eine Speichermasse bildender Sorptionsrotor 22 zum Austauschen von Wärme und Feuchtigkeit zwischen dem ersten Luftstrom 37 und dem zweiten Luftstrom 39 und ein in einem Wärmetauscherrotorgehäuse 25 angeordneter, drehbarer, eine Speichermasse bildender Wärmetauscherrotor 23 zum Austauschen von Wärme zwischen dem ersten Luftstrom 37 und dem zweiten Luftstrom 39 angeordnet. Die Stirnfläche 24a bzw. 24b des Sorptionsrotors 22 bzw. die Stirnfläche 25a bzw. 25b des Wärmetauscherrotors 23 verlaufen dabei quer, bevorzugt rechtwinklig, zu den ersten und zweiten Strömungskanälen 20 bzw. 18. Der Wärmetauscherrotor 23 ist, in Strömungsrichtung des zweiten Luftstroms 39 gesehen, stromaufwärts bezüglich des Sorptionsrotors 22 angeordnet.

Von einer dem Sorptionsrotor 22 zugewandten Stirnfläche 25a des Wärmetauscherrotors 23 zu einer dem Wärmetauscherrotor 23 zugewandten Stirnfläche 24a des Sorptionsrotors 22 erstreckt sich ein dem ersten Strömungskanal 20 zugeordneter erster Zwischenraum 44 und ein dem zweiten Strömungskanal 18 zugeordneter zweiter Zwischenraum 46. Der erste Zwischenraum 44 und der zweite Zwischenraum 46 sind gegenüber der Umgebung abgeschlossen und voneinander getrennt. Ein Temperatursensor und/oder ein Feuchtigkeitssensor können im ersten, gegebenenfalls im zweiten, Zwischenraum oder in beiden Zwischenräume angeordnet sein.

Es findet im Wesentlichen kein Energieaustausch zwischen der Umgebung und dem ersten 44 und dem zweiten Zwischenraum 46 statt.

Die mit dem ersten Luftstrom 37 und mit dem zweiten Luftstrom 39 zusammenwirkende Oberfläche der Speichermasse des Sorptionsrotors 22 ist in bekannter Art und Weise mit Zeolith-Material beschichtet, bevorzugt mit einer Porengrösse zwischen 0,3 nm und 1,5 nm, besonders bevorzugt zwischen 0,3 nm und 0,5 nm.

Das stirnseitig jeweils Durchlässe für den ersten Luftstrom 37 und den zweiten Luftstrom 39 aufweisende Sorptionsrotorgehäuse 24 und Wärmetauscherrotorgehäuse 25 ist so ausgestaltet, dass die vom Gebäude durch den Ablufteinlass 10 in den ersten Strömungskanal 20 angesaugte Abluft 28 als erster Luftstrom 37 den Sorptionsrotor 22, den ersten Zwischenraum 44 und den Wärmetauscherrotor 23 durchströmt, ohne um das Sorptionsrotorgehäuse 24 und das Wärmetauscherrotorgehäuse 25 herumströmen zu können, und danach durch den Fortluftauslass 16 als Fortluft 32 wenigstens annähernd vollständig an die Umgebung abgegeben wird. Gleichzeitig durchströmt die durch den Aussenlufteinlass 14 in den zweiten Strömungskanal 18 angesaugte Aussenluft 30 als zweiter Luftstrom 39 den Wärmetauscherrotor 23, den zweiten Zwischenraum 46 und den Sorptionsrotor 22, ohne um das Sorptionsrotorgehäuse 24 und das Wärmetauscherrotorgehäuse 25 herumströmen zu können, und wird danach durch den Zuluftauslass 12 als Zuluft 34 dem Gebäude zugeführt.

Bevorzugt umfassen der Sorptionsrotor 22 und der Wärmetauscherrotor 23 eine Spülzone 35 bzw. 41, wo in bekannter Art und Weise der im Sorptionsrotor 22 und im Wärmetauscherrotor 23 abtransportierte Anteil des mit Chemikalien und Mikro-Organismen beladenen ersten Luftstroms 37 mit Luft des zweiten Luftstroms 39 ersetzt wird.

Ferner ist in der gezeigten Ausführungsform ein erster bzw. ein zweiter Ventilator 38 bzw. 36 im ersten bzw. zweiten Strömungskanal 20 bzw. 18 angeordnet. Vorzugsweise ist der erste Ventilator 38 im ersten Strömungskanal 20 nahe dem Fortluftauslass 16 und der zweite Ventilator 36 im zweiten Strömungskanal 18 nahe dem Zuluftauslass 12 angeordnet.

Eine Nachheizung 47 ist im zweiten Strömungskanal 18, in Strömungsrichtung des zweiten Luftstroms 39 gesehen, stromabwärts des Sorptionsrotors 22 angeordnet, mit der der zweite Luftstrom 39 bei Bedarf auf die erforderliche Temperatur gebracht wird. Im gezeigten Beispiel ist, in Strömungsrichtung gesehen des zweiten Luftstroms 39, der zweite Ventilator 36 stromabwärts des Sorptionsrotors 22 angeordnet, und die Nachheizung 47 folgt dem zweiten Ventilator 36.

Ein erster Filter 42 ist im ersten Strömungskanal 20 vorzugsweise nahe dem Ablufteinlass 10 und ein zweiter Filter 40 ist im zweiten Strömungskanal 18 nahe dem Aussenlufteinlass 14 angeordnet, sodass Schmutzklumpen oder Staub nicht in die Strömungskanäle 18, 20 eingesaugt werden und sie beschädigen können. Besonders bevorzugt ist die Anwendung von Doppelfiltern, bestehend aus einem Grobpartikelfilter und einem dem Grobpartikelfilter stromabwärts nachgeschalteten Feinpartikelfilter, die eine besonders gute Filterung und einfache Wartung erlauben.

Ein mit einer Umluftklappe 50 versehener Umluftdurchlass 48 ist zwischen dem ersten und dem zweiten Strömungskanal 20 bzw. 18, in Strömungsrichtung des ersten Luftstroms 37 gesehen, stromabwärts des Wärmetauscherrotors 23 und, in Strömungsrichtung des zweiten Luftstroms 39 gesehen, stromaufwärts des Wärmetauscherrotors 23 in der Trennwand 7 angeordnet.

Bevorzugt umfasst die Vorrichtung weiter einen ersten Temperatursensor 51 und einen ersten Feuchtigkeitssensor 52 in dem ersten Strömungskanal, vorzugsweise nahe dem Ablufteinlass 10, und einen zweiten Temperatursensor 53 und einen zweiten Feuchtigkeitssensor 54 in dem zweiten Strömungskanal, vorzugsweise nahe dem Zuluftauslass 12.

Ein Tropfenabscheider 55 ist vorzugsweise nahe dem Ablufteinlass 10, in Strömungsrichtung des ersten Luftstroms 37 gesehen, stromaufwärts des ersten Filters 42 angeordnet, um mit Chemikalien beladenen Wassertröpfchen und Aerosole aus der Abluft abzuscheiden, sodass sie nicht weiter in die Vorrichtung 1 eindringen und Korrosion verursachen, welche die Wartungskosten erhöht und die Lebensdauer der Vorrichtung verkürzt.

Die Vorrichtung 1 wird bevorzugt über eine Steuereinrichtung 56 mit einer Regelungseinheit für die absolute Feuchtigkeit und die Temperatur gesteuert.

Die Regulierung der Temperatur des dem Sorptionsrotor 22 zugeführten zweiten Luftstroms 39 erfolgt über die Drehgeschwindigkeit des Wärmetauscherrotors 23, insbesondere in Abhängigkeit von der Differenz zwischen der Temperatur der Aussenluft 30 und der für die Vermeidung der Kondensation in der Vorrichtung erforderlichen Temperatur des zweiten Luftstroms 39.

Die Regulierung der absoluten Feuchtigkeit der Zuluft 34 erfolgt über die Drehgeschwindigkeit des Sorptionsrotors 22, insbesondere in Abhängigkeit von der Differenz zwischen der Feuchtigkeit der Zuluft 34 und der Feuchtigkeit des dem Sorptionsrotor 22 zugeführten ersten Luftstroms 37, und die Temperatur der Zuluft 34 ändert sich in Abhängigkeit seiner absoluten Feuchtigkeit. Vorzugsweise ist die Drehgeschwindigkeit des Wärmetauscherrotors 23 konstant und die Regulierung der Feuchtigkeit der Zuluft 34 erfolgt lediglich über die Drehgeschwindigkeit des Sorptionsrotors 22.

Temperatur und Feuchtigkeit werden über die vorstehend erwähnten Temperatursensoren und Feuchtigkeitssensoren ermittelt.

Die Drehgeschwindigkeit des Sorptionsrotors 22 und des Wärmetauscherrotors 23 wird über die Ansteuerung eines Antriebsmotors 61 bzw. 62 geregelt. Beispielsweise beträgt die Drehgeschwindigkeit des Wärmetauscherrotors 23 bzw. des Sorptionsrotors 22 ca. 12 Drehungen/ min bzw. 15 bis 25 Drehungen/ min, typischerweise 20 Drehungen/ min. Ebenfalls werden die weiteren Einheiten der Vorrichtung, wie z.B. die Ventilatoren 38 bzw. 36, die Umluftklappe 50, die Aussenlufteinlass- und Fortluftauslassklappe 58 bzw. 60, und die Nachheizung 47 mit derselben Steuereinrichtung 56 gesteuert.

Schliesslich sind der Aussenlufteinlass 14 und der Fortluftauslass 16 mit einer Aussenlufteinlass- bzw. Fortluftauslassklappe 58 bzw. 60 versehen, die geschlossen werden können, um die Strömungskanäle von der Umgebung zu trennen. Dies kann im nicht-stationären Betrieb der Fall sein, zum Beispiel beim Anfahren der Vorrichtung 1 oder bei der Zirkulation der Schwimmhallenluft über die Vorrichtung 1, z.B. zur schnellen Aufwärmung der Schwimmhallenluft.

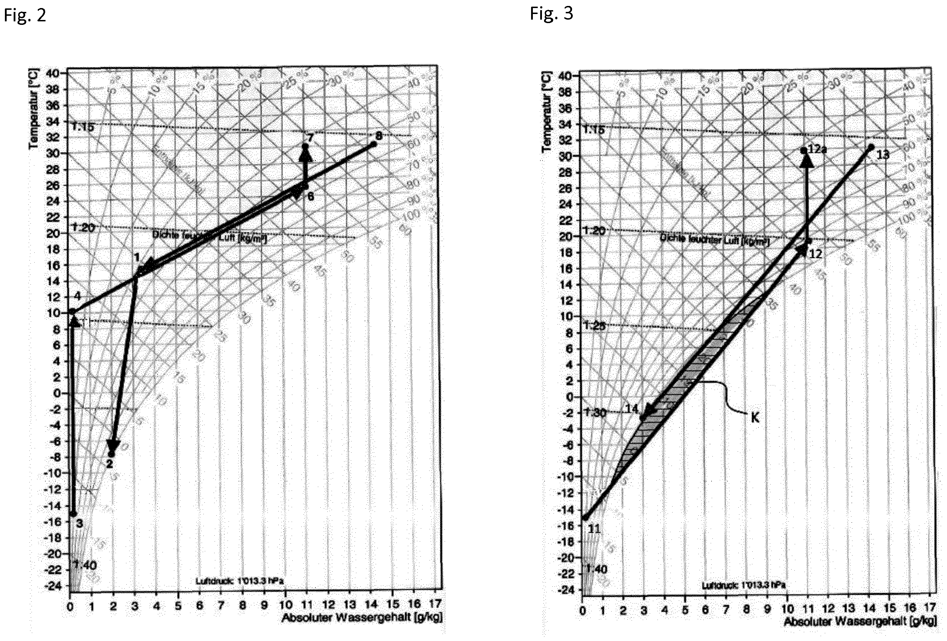

Um den Unterschied im Betrieb für eine Schwimmhalle zwischen einer erfindungsgemässen Vorrichtung und einer erfindungsgemässen Vorrichtung jedoch ohne Wärmetauscherrotor zur Vorwärmung der Aussenluft darzulegen, wurden Simulationsrechnungen durchgeführt. Das Resultat dieser Simulationsrechnungen wird anhand der Fig. 2 und Fig. 3 näher erläutert.

In beiden Simulationen beträgt die Temperatur der Aussenluft (minus) -15°C, die Temperatur der Schwimmhallenluft (plus) +30°C, und die Luftströme 17'100 kg/h. Die Feuchtigkeit der Zuluft ist ca. 3g/kg niedriger als die Feuchtigkeit der Schwimmhallenluft, i.e. der Abluft.

Ein Sorptionsrotor und ein Wärmetauscherrotor für eine solche Anwendung können einen Durchmesser von ca. 2 Meter, eine Tiefe von ca. 0.2 Meter und ein Gewicht zwischen ca. 250 kg und 350 kg aufweisen.

Die Mollier h,x Diagramme der Fig. 2 und Fig. 3 ermöglichen es, Zustandsänderungen feuchter Luft durch Erwärmung, Befeuchtung, Entfeuchtung, Kühlung und Mischung verschiedener Luftmengen zu ermitteln. In der folgenden Beschreibung der Fig. 2 und Fig. 3 wird jeder Zustand (Temperatur, Luftfeuchtigkeit, Enthalpie und Dichte) mit einem Punkt auf diesen Diagrammen gekennzeichnet und die entsprechenden Grössen (Temperatur, absoluter Wassergehalt, Enthalpie und Leistung) werden in Tabelle 1 und Tabelle 2 zusammengefasst.

Eine gute Luftqualität in Schwimmhallen erfordert einen möglichst grossen Austausch der Schwimmhallenluft mit sauberer Aussenluft. Dies wird mit dem Betrieb der erfindungsgemässen Vorrichtung erreicht, wie im Beispiel in Fig. 2 veranschaulicht.

Im stationären Betrieb der erfindungsgemässen Vorrichtung 1 wird Abluft 28 gemäss Punkt 8 durch den Ablufteinlass 10 als erster Luftstrom 37 in den ersten Strömungskanal 20 über einen ersten Ventilator 38 angesaugt. Der erste Luftstrom 37 durchströmt den Tropfenabscheider 55, um mit Chemikalien beladene Wassertropfen und Aerosole aus dem ersten Luftstrom 37 abzuscheiden, sodass sie nicht weiter in die Vorrichtung 1 eindringen. Weiter durchströmt der erste Luftstrom 37 den ersten Filter 42, um Schmutzklumpen und Staub auszufiltern, sodass sie nicht weiter in die Vorrichtung eingesaugt werden.

Weiter durchströmt der erste Luftstrom 37 wenigstens annähernd vollständig den Sorptionsrotor 22, wobei Feuchtigkeit und Wärme vom ersten Luftstrom 37 durch den Sorptionsrotor 22 abgezogen werden.

Stromabwärts des Sorptionsrotors 22 durchströmt der erste Luftstrom 37 zuerst den dem ersten Strömungskanal 20 zugeordneten ersten Zwischenraum 44, wo er den Zustand gemäss Punkt 1 aufweist. Da der erste Zwischenraum 44 erfindungsgemäss gegenüber der Umgebung abgeschlossen ist, findet keinen Wärme- oder Feuchtigkeitsaustausch in diesem Zwischenraum 44 statt.

Weiter durchströmt der erste Luftstrom 37 den Wärmetauscherrotor 23, wobei Wärme vom ersten Luftstrom 37 durch den Wärmetauscherrotor 23 abgezogen wird.

Schliesslich wird der erste Luftstrom 37 dem Fortluftauslass 16 zugeführt und dort als Fortluft 32 gemäss Punkt 2 aus dem Gebäude abgeführt.

Gleichzeitig wird Aussenluft 30 gemäss Punkt 3 durch den Aussenlufteinlass 14 als zweiter Luftstrom 39 in den zweiten Strömungskanal 18 über einen zweiten Ventilator 36 angesaugt. Der zweite Luftstrom 39 durchströmt den zweiten Filter 40, um Schmutzklumpen und Staub auszufiltern, sodass sie nicht weiter in die Vorrichtung eingesaugt werden.

Weiter durchströmt der zweite Luftstrom 39 wenigstens annähernd vollständig den Wärmetauscherrotor 23, wobei der zweite Luftstrom 39 Wärme vom ersten Luftstrom 37 über den Wärmetauscherrotor 23 aufnimmt. Folglich wird der zweite Luftstrom 39 vorerwärmt und erreicht einen Zustand, sodass er weiter im zweiten Strömungskanal 18 ohne Kondensationsphase auf die geforderte absolute Feuchtigkeit und Temperatur gebracht werden kann.

Stromabwärts des Wärmetauscherrotors 24 durchströmt der zweite Luftstrom 39 zuerst den dem zweiten Strömungskanal 18 zugeordneten zweiten Zwischenraum 46, wo er den Zustand gemäss Punkt 4 aufweist.

Da erfindungsgemäss der zweite Zwischenraum 46 gegenüber der Umgebung abgeschlossen ist, findet keinen Wärme- oder Feuchtigkeitsaustausch in diesem Zwischenraum 46 statt.

Weiter durchströmt der zweite Luftstrom 39 den Sorptionsrotor 22, nimmt Feuchtigkeit und Wärme vom ersten Luftstrom 37 über den Sorptionsrotor 22 auf und erreicht den Zustand gemäss Punkt 6 ohne Kondensationsphase. Dies ist auf Fig. 2 ersichtlich, wo die Zustandsänderung des zweiten Luftstroms 39 vom Punkt 4 zu Punkt 6 sich jeweils unterhalb der Luftfeuchtigkeitssättigung befindet.

Schliesslich wird der zweite Luftstrom 39 durch eine im zweiten Strömungskanal 18, in Strömungsrichtung des zweiten Luftstroms 39 gesehen, stromabwärts des Sorptionsrotors 22 angeordnete Nachheizung 47 auf die erforderliche Temperatur gebracht, dem Zuluftauslass 12 zugeführt und dort als Zuluft 34 gemäss Punkt 7 ins Gebäude hineingeführt.

Die Vorrichtung wird über die Regelung der Geschwindigkeit des Sorptionsrotors 22 und des Wärmetauscherrotors so betrieben, dass die Feuchtigkeit des ersten Luftstroms 37 und des zweiten Luftstroms 39 immer unter dem entsprechenden Feuchtigkeitssättigungspunkt bleibt und folglich eine Kondensationsphase vermieden wird.

Im stationären Betrieb wird mit wenigstens annähernd 100% Aussenluft 30 gemäss Punkt 3 gefahren, so dass einen möglichst grossen Austausch der Schwimmhallenluft mit sauberer Aussenluft 30 ermöglicht wird, ohne die Behaglichkeit in der Schwimmhalle zu reduzieren und praktisch ohne Mischung der mit Chemikalien und Mikro-Organismen beladenen Abluft 28 mit der Zuluft 34.

Die Berechnung der Punkte für diesen Betrieb der erfindungsgemässen Vorrichtung bei einem Luftvolumen von 15'000 m3/h, respektive einer Luftmenge von 17'067 kg/h ist in der Tabelle 1 zusammengefasst.

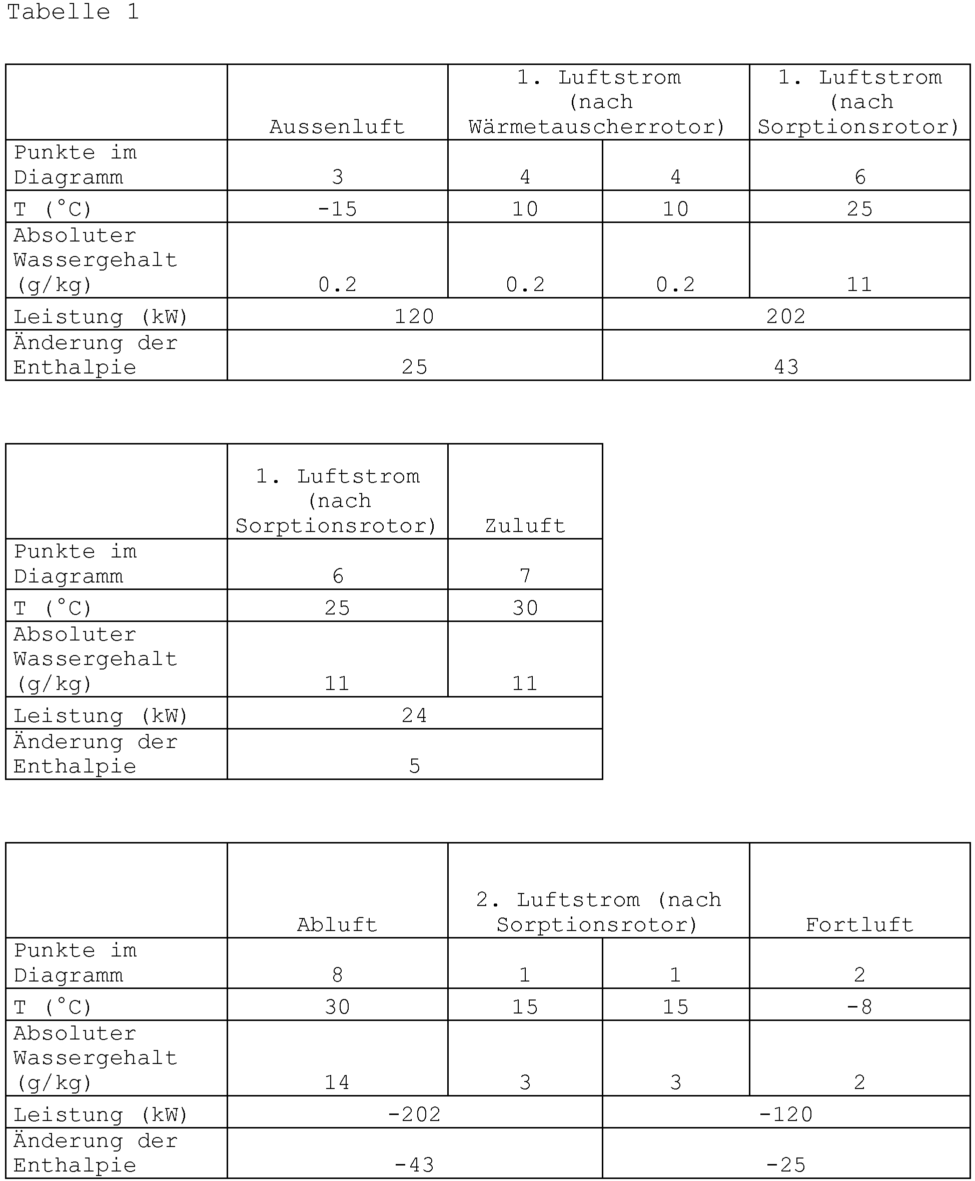

Die Energiebilanz pro Stunde dieses Betriebs besteht aus einer Wärmerückgewinnung von -202 kW (Punkt 8 zu 1) und - 120 kW (Punkt 1 zu 2), und einem Bedarf von 24 kW (Punkt 6 zu 7) für die Nacherwärmung. Netto ergibt sich also eine Wärmerückgewinnung von -298 kW.

Der stationäre Betrieb einer erfindungsgemässen Vorrichtung jedoch ohne Wärmetauscherrotor zur Vorwärmung der Aussenluft ist in Fig. 3 abgebildet.

Abluft 28 gemäss Punkt 13 wird durch den Ablufteinlass 10 als erster Luftstrom 37 in den ersten Strömungskanal 20 über einen ersten Ventilator 38 angesaugt. Weiter durchströmt der erste Luftstrom 37 wenigstens annähernd vollständig den Sorptionsrotor 22, wobei Feuchtigkeit und Wärme vom ersten Luftstrom 37 durch den Sorptionsrotor 22 abgezogen werden.

Der erste Luftstrom 37 wird so tief abgekühlt, bis die Sättigungstemperatur im Punkt 14 erreicht wird und Kondensat ausfällt.

Gleichzeitig wird Aussenluft 30 gemäss Punkt 11 durch den Aussenlufteinlass 14 als zweiter Luftstrom 39 in den zweiten Strömungskanal 18 über einen zweiten Ventilator 36 angesaugt.

Der zweite Luftstrom 39 durchströmt wenigstens annähernd vollständig den Sorptionsrotor 22, nimmt Feuchtigkeit und Wärme vom ersten Luftstrom 37 über den Sorptionsrotor 22 auf und erreicht den Zustand gemäss Punkt 12.

Wie aus der Fig.3 ersichtlich ist, führt dieser Betrieb der Vorrichtung bei den gleichen Bedingungen wie die erfindungsgemässe Vorrichtung zu einer wesentlichen Kondensationsphase in der Vorrichtung, weil der kalte erste Luftstrom 37 mit dem Zustand gemäss Punkt 11 schnell den Kondensationsbereich K unterhalb der Sättigungskurve erreicht. Dies führt jedoch zu Betriebsproblemen, z.B. wegen einer möglichen Korrosion der Bauteile und zu einem suboptimalen Wärmeaustausch.

Schliesslich wird der zweite Luftstrom 39 durch eine im zweiten Strömungskanal 18, in Strömungsrichtung des zweiten Luftstroms 39 gesehen, stromabwärts des Sorptionsrotors 22 angeordnete Nachheizung 47 auf die erforderliche Temperatur gebracht, dem Zuluftauslass 12 zugeführt und dort als Zuluft 34 gemäss Punkt 12a ins Gebäude hineingeführt.

Die Berechnung der Punkte für den Betrieb dieser Vorrichtung bei einem Luftvolumen von 15'000 m3/h, respektive einer Luftmenge von 17'067 kg/h ist in der Tabelle 2 zusammengefasst.

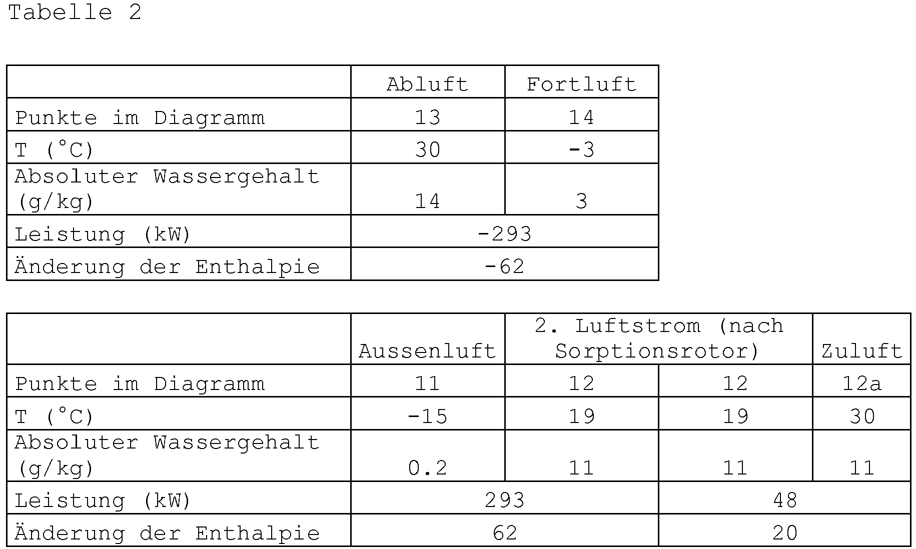

Die Energiebilanz pro Stunde dieses Betriebs besteht aus einer Wärmerückgewinnung von -293 kW (Punkt 13 zu 14), einem Bedarf von 48 kW (Punkt 12 zu 12a) für die Nacherwärmung. Netto ergibt sich also eine Wärmerückgewinnung von -245 kW.

Wie aus der Energiebilanz der jeweiligen Vorrichtung zu entnehmen ist, ermöglicht die erfindungsgemässe Vorrichtung einen energieschonenden Betrieb, da die Wärmerückgewinnung der erfindungsgemässen Vorrichtung höher ist.

## Patentansprüche

1. Vorrichtung für ein Gebäude, insbesondere eine Schwimmhalle, zum Austauschen von Feuchtigkeit und Wärme umfassend einen ersten Strömungskanal (20), der einen Ablufteinlass (10) und einen Fortluftauslass (16) miteinander verbindet, und einen zweiten Strömungskanal (18), der einen Aussenlufteinlass (14) und einen Zuluftauslass (12) miteinander verbindet, einen dem ersten Strömungskanal (20) zugeordneten ersten Ventilator (38), um durch den Ablufteinlass (10) angesaugte Abluft (28) als einen ersten Luftstrom (37) durch den ersten Strömungskanal (20) dem Fortluftauslass (16) zuzuführen und dort als Fortluft (32) aus dem Gebäude abzuführen, einen dem zweiten Strömungskanal (18) zugeordneten zweiten Ventilator (36), um durch den Aussenlufteinlass (14) angesaugte Aussenluft (30) als einen zweiten Luftstrom (39) durch den zweiten Strömungskanal (18) dem Zuluftauslass (12) zuzuführen und dort als Zuluft (34) ins Gebäude hineinzuführen, einen mit variabler Drehgeschwindigkeit motorangetriebenen Sorptionsrotor (22) zum Austauschen von Wärme und Feuchtigkeit zwischen dem ersten Luftstrom (37) und dem zweiten Luftstrom (39), und einen, in Strömungsrichtung des zweiten Luftstroms (39) gesehen, stromaufwärts bezüglich des Sorptionsrotors (22) angeordneten, motorangetriebenen Wärmetauscherrotor (23) zum Austauschen von Wärme zwischen dem ersten Luftstrom (37) und dem zweiten Luftstrom (39), wobei von einer dem Sorptionsrotor (22) zugewandten Stirnfläche (25a) des Wärmetauscherrotors (23) zu einer dem Wärmetauscherrotor (23) zugewandten Stirnfläche (24a) des Sorptionsrotors (22) sich ein dem ersten Strömungskanal (20) zugeordneter erster Zwischenraum (44) und ein dem zweiten Strömungskanal (18) zugeordneter zweiter Zwischenraum (46) erstrecken, wobei der erste Luftstrom (37) und der zweite Luftstrom (39) den Sorptionsrotor (22) und den Wärmetauscherrotor (23) wenigstens annähernd vollständig durchströmen, **dadurch gekennzeichnet, dass** der erste Zwischenraum (44) und der zweite Zwischenraum (46) gegenüber der Umgebung abgeschlossen sind.

2. Vorrichtung nach Anspruch 1, **dadurch gekennzeichnet, dass**, der erste Strömungskanal (20) und der zweite Strömungskanal (18) durch ein Gehäuse (2) definiert sind.

3. Vorrichtung nach Anspruch 1 oder 2, **gekennzeichnet durch** eine im zweiten Strömungskanal (18), in Strömungsrichtung des zweiten Luftstroms (39) gesehen, stromabwärts des Sorptionsrotors (22) angeordnete Nachheizung (47), mit der der zweite Luftstrom (39) auf die erforderliche Temperatur gebracht wird.

4. Vorrichtung nach Anspruch 3, **dadurch gekennzeichnet, dass**, in Strömungsrichtung des zweiten Luftstroms (39) gesehen, der zweite Ventilator (36) stromabwärts des Sorptionsrotors (22) angeordnet ist, wobei bevorzugt die Nachheizung (47) dem zweiten Ventilator (36) folgt.

5. Vorrichtung nach einem der Ansprüche 1 bis 4, **dadurch gekennzeichnet, dass** die Drehgeschwindigkeit des Wärmetauscherrotors (23) gesteuert ist, um die Temperatur des dem Sorptionsrotor (22) zugeführten zweiten Luftstroms (39) zu regulieren.

6. Vorrichtung nach einem der Ansprüche 1 bis 5, **dadurch gekennzeichnet, dass** ein mit einer Umluftklappe (50) versehener Umluftdurchlass (48) zwischen dem ersten und dem zweiten Strömungskanal (20 bzw. 18), in Strömungsrichtung des ersten Luftstroms (37) gesehen, stromabwärts des Wärmetauscherrotors (23) und, in Strömungsrichtung des zweiten Luftstroms (39) gesehen, stromaufwärts des Wärmetauscherrotors (23) angeordnet ist, wobei die Umluftklappe (50) geschlossen ist, um im stationären Betrieb mit wenigstens annähernd 100% Aussenluft (30), ohne Kondensationsphase, zu fahren.

7. Vorrichtung nach einem der Ansprüche 1 bis 6, **dadurch gekennzeichnet, dass** ein erster Temperatursensor (51) und ein erster Feuchtigkeitssensor (52) im ersten Strömungskanal (20), vorzugsweise nahe dem Ablufteinlass (10), und ein zweiter Temperatursensor (53) und ein zweiter Feuchtigkeitssensor (54) im zweiten Strömungskanal (18), vorzugsweise nahe dem Zuluftauslass (12), angeordnet sind.

8. Vorrichtung nach einem der Ansprüche 1 bis 7, **dadurch gekennzeichnet, dass** die Drehgeschwindigkeit des Sorptionsrotors (22) gesteuert ist, um die absolute Feuchtigkeit der Zuluft (34) zu regulieren, insbesondere in Abhängigkeit von der Feuchtigkeitsdifferenz zwischen Zuluft (34) und Abluft (28).

9. Vorrichtung nach einem der Ansprüche 1 bis 8, **dadurch gekennzeichnet, dass** eine mit dem ersten und mit dem zweiten Luftstrom (37, 39) zusammenwirkende Oberfläche des Sorptionsrotors (22) mit Zeolith mit einer Porengrösse zwischen 0,3 nm und 1,5 nm, bevorzugt zwischen 0,3 nm und 0,5 nm, beschichtet ist.

10. Vorrichtung nach einem der Ansprüche 1 bis 9, **dadurch gekennzeichnet, dass** ein Filter (42 bzw. 40), insbesondere ein Doppelfilter, stromaufwärts des Sorptionsrotors (22) im ersten und/oder stromaufwärts des Wärmetauscherrotors (23) im zweiten Strömungskanal (20 bzw. 18) angeordnet ist.

11. Vorrichtung nach einem der Ansprüche 1 bis 10, **dadurch gekennzeichnet, dass** ein Abscheider (55) zur Trennung der mit Chemikalien beladenen Wassertröpfchen und Aerosole aus der Abluft, vorzugsweise ein Tropfenabscheider (55), stromaufwärts des Sorptionsrotors (22) im ersten Strömungskanal (20), vorzugsweise stromaufwärts des ersten Filters (42), angeordnet ist.

12. Verfahren zum Feuchtigkeits- und Wärmeaustauch für ein Gebäude, insbesondere eine Schwimmhalle, wobei durch einen Ablufteinlass (10) eines ersten Strömungskanals (20) angesaugte Abluft (28) als einen ersten Luftstrom (37) durch den ersten Strömungskanal (20) mittels eines diesem zugeordneten ersten Ventilators (38) einem Fortluftauslass (16) des ersten Strömungskanals (20) zuzugeführt wird und dort als Fortluft (32) aus dem Gebäude abgeführt wird, durch einen Aussenlufteinlass (14) eines zweiten Strömungskanals (18) angesaugte Aussenluft (30)als einen zweiten Luftstrom (39) durch den zweiten Strömungskanal (18) mittels eines diesem zugeordneten zweiten Ventilators (36) einem Zuluftauslass (12) des zweiten Strömungskanals (18) zuzugeführt wird und dort als Zuluft (34) ins Gebäude hineingeführt wird, Wärme und Feuchtigkeit zwischen dem ersten Luftstrom (37) und dem zweiten Luftstrom (39) über einen mit variabler Drehgeschwindigkeit motorangetriebenen Sorptionsrotor (22) austauscht werden, Wärme zwischen dem ersten Luftstrom (37) und dem zweiten Luftstrom (39) über einen, in Strömungsrichtung des zweiten Luftstroms (39) gesehen, stromaufwärts bezüglich des Sorptionsrotors (22) angeordneten, motorangetriebenen Wärmetauscherrotor (23) austauscht wird, wobei von einer dem Sorptionsrotor (22) zugewandten Stirnfläche (25a) des Wärmetauscherrotors (23) zu einer dem Wärmetauscherrotor (23) zugewandten Stirnfläche (24a) des Sorptionsrotors (22) sich ein dem ersten Strömungskanal (20) zugeordneter erster Zwischenraum (44) und ein dem zweiten Strömungskanal (18) zugeordneter zweiter Zwischenraum (46) erstrecken, der erste Luftstrom (37) und der zweite Luftstrom (39) den Sorptionsrotor (22) und den Wärmetauscherrotor (23) wenigstens annähernd vollständig durchströmen, **dadurch gekennzeichnet, dass** der erste Zwischenraum (44) und der zweite Zwischenraum (46) gegenüber der Umgebung abgeschlossen sind und dadurch der erste Luftstrom (37) bzw. der zweite Luftstrom (39) durch den ersten Zwischenraum (44) bzw. den zweiten Zwischenraum (46) frei von Wärmeenergiezuführung geführt werden.

13. Verfahren nach Anspruch 12, **dadurch gekennzeichnet, dass** der zweite Luftstrom (39) mit einer im zweiten Strömungskanal (18), in Strömungsrichtung des zweiten Luftstroms (39) gesehen, stromabwärts des Sorptionsrotors (22) angeordneten Nachheizung (47), auf die erforderliche Temperatur gebracht wird.

14. Verfahren nach Anspruch 12 oder 13, **dadurch gekennzeichnet, dass** die Temperatur des dem Sorptionsrotor (22) zugeführten zweiten Luftstroms (39) über die Drehgeschwindigkeit des Wärmetauscherrotors (23) reguliert wird.

15. Verfahren nach einem der Ansprüche 12 bis 14, **dadurch gekennzeichnet, dass** eine Umluftklappe (50) eines zwischen dem ersten und dem zweiten Strömungskanal (20 bzw. 18), in Strömungsrichtung des ersten Luftstroms (37) gesehen, stromabwärts des Wärmetauscherrotors (23) und, in Strömungsrichtung des zweiten Luftstroms (39) gesehen, stromaufwärts des Wärmetauscherrotors (23) angeordneten Umluftdurchlasses (48) geschlossen ist, um im stationären Betrieb mit wenigstens annähernd 100% Aussenluft (30), ohne Kondensationsphase, zu fahren.
